# EUROPÄISCHE PATENTSCHRIFT

(11) **EP 3 585 662 B1**
(45) Veröffentlichungstag und Bekanntmachung des Hinweises auf die Patenterteilung: **06.01.2021**
(21) Anmeldenummer: 18708350.6
(22) Anmeldetag: 20.02.2018
(51) Int. Cl.: B60T 8/32, B60T 8/171, G01P 3/44

(54) **VORRICHTUNG ZUM POSITIONIEREN EINES RADDREHZAHLSENSORS, ABS-SYSTEM UMFASSEND EINE VORRICHTUNG ZUM POSITIONIEREN EINES RADDREHZAHLSENSORS UND VERFAHREN ZUR JUSTAGE EINES RADDREHZAHLSENSORS**
DEVICE FOR POSITIONING AN ANGULAR SPEED SENSOR, ABS-SYSTEM WITH SUCH A DEVICE, AND METHOD TO ADJUST AN ANGULAR SPEED SENSOR
DISPOSITIF POUR LE POSITIONNEMENT D'UN CAPTEUR DE POSITION ANGULAIRE, SYSTÈME ABS AVEC UN TEL DISPOSITIF, ET PROCÉDÉ POUR POSITIONNER UN CAPTEUR DE POSITION ANGULAIRE

(30) Priorität: 27.02.2017 DE 102017103979
(43) Veröffentlichungstag der Anmeldung: 01.01.2020
(73) Patentinhaber: SAF-HOLLAND GmbH, 63856 Bessenbach (DE)
(72) Erfinder: CHRIST, Armin, 63856 Bessenbach (DE); KREINER, Kerstin, 63741 Aschaffenburg (DE)
(74) Vertreter: Müller Schupfner & Partner Patent- und Rechtsanwaltspartnerschaft mbB
(86) Internationale Anmeldenummer: PCT/EP2018/054169
(87) Internationale Veröffentlichungsnummer: WO 2018/153867

(56) Entgegenhaltungen:
- EP-A1- 2 243 673
- EP-A2- 2 583 873
- DE-A1-102007 056 340

## Beschreibung

Die vorliegende Erfindung betrifft eine Vorrichtung zum Positionieren eines Raddrehzahlsensors, ein ABS-System umfassend eine Vorrichtung zum Positionieren eines Raddrehzahlsensors und ein Verfahren zur Justage eines Raddrehzahlsensors.

ABS-Systeme sind aus dem Stand der Technik hinlänglich bekannt und finden sich beispielsweise an Radlageraufhängungen, bei denen ein nichtrotierendes Achskörperteil und ein gegenüber dem Achskörperteil um eine Rotationsachse rotierbares weiteres Achskörperteil für eine rotierende Lagerung eines Rads, insbesondere Fahrzeugrads, vorgesehen sind, wieder. Wesentliche Bestandteile des ABS-Systems sind ein Raddrehzahlsensor und ein Polrad, mit denen sich eine aktuelle Raddrehzahl erfassen bzw. bestimmen lässt. Dabei ist das Polrad an das rotierende weitere Achskörperteil angebunden und umfasst an seinem äußeren Umfang eine Strukturierung, bevorzugt eine Verzahnung, die im Falle eines Rotierens des weiteren Achskörperteils am ortsfesten Raddrehzahlsensor vorbeigeführt wird. Der ortsfest angeordnete Raddrehzahlsensor ist dabei bevorzugt derart ausgestaltet, dass er den Wechsel zwischen Verzahnung und Leerbereich zwischen zwei Verzahnung erfasst, beispielsweise anhand einer Änderung eines Magnetfeldes, wenn im Falle des rotierenden weiteren Achskörperteils die Verzahnung am Raddrehzahlsensor vorbeigeführt wird.

Die EP 2 243 673 A1 offenbart ein Achsantriebsystem mit einem Radgeschwindigkeitsmesssystem innerhalb einer Differenzialanordnung.

DE 10 2007 056 340 A1 betrifft eine Klemmbuchse für einen Sensor zur reibschlüssigen Fixierung und Justierung des Sensors in einer Bohrung eines Halteteils.

Es ist eine Aufgabe der vorliegenden Erfindung, eine Vorrichtung bereitzustellen, mit der sich eine möglichst große Signalstärke für die vom Raddrehzahlsensor erfasste Messgröße dauerhaft und möglichst einfach sicherstellen lässt.

Diese Aufgabe wird gelöst durch eine Vorrichtung gemäß Anspruch 1, durch ein ABS-System gemäß Anspruch 15 und durch ein Verfahren gemäß Anspruch 16. Weitere Vorteile und Merkmale der Erfindung ergeben sich aus den Unteransprüchen sowie der Beschreibung und den beigefügten Figuren.

Erfindungsgemäß ist eine Vorrichtung zum Positionieren eines Raddrehzahlsensors relativ zu einem Polrad vorgesehen, umfassend eine Befestigungseinrichtung zur Anbindung der Vorrichtung an ein Achskörperteil, einen Aufnahmebereich zur Aufnahme des Raddrehzahlsensors und eine Positioniereinrichtung zum kontrollierten Einstellen eines Abstands zwischen dem Aufnahmebereich und dem Polrad. Gegenüber dem Stand der Technik erweist es sich dabei als vorteilhaft, dass sich mittels der Positioniereinrichtung der Abstand zwischen dem Polrad und dem Raddrehzahlsensor kontrolliert einstellen lässt. Hierbei ist nicht nur die möglichst genaue Einstellung des Abstands vorteilhaft, sondern die Positioniervorrichtung vereinfacht auch die Handhabe beim Einstellen des optimalen Abstands. Insbesondere kann auf eine manuelle Ausrichtung des Raddrehzahlsensors gegenüber dem Aufnahmebereich verzichtet werden. Statt des manuellen Ausrichtens des Raddrehzahlsensors gegenüber dem Aufnahmebereich, gestattet die erfindungsgemäße Vorrichtung nämlich durch Betätigung der Positioniereinrichtung eine Verlagerung des Aufnahmebereichs und damit des Raddrehzahlsensors. Dabei lässt sich mit der Positioniereinrichtung der Abstand zwischen dem Aufnahmebereich und der Befestigungseinrichtung und damit der Abstand zwischen dem Polrad und dem Raddrehzahlsensor ändern bzw. verstellen. Vorzugsweise ist es vorgesehen, dass das Achskörperteil ein Teil einer Fahrzeugachse, insbesondere eines Nutzfahrzeugs, ist. Hierbei ist das Achskörperteil, an das die Befestigungseinrichtung im montierten Zustand angebunden ist, insbesondere ortsfest und nichtrotierend, während ein weiteres Achskörperteil gegenüber dem ortsfesten und nichtrotierenden Achskörperteil um eine Rotationsachse rotierbar gelagert ist. Weiterhin ist es vorgesehen, dass das Polrad drehfest mit dem rotierbaren Achskörperteil verbunden ist und an seinem äußeren Umfang eine Strukturierung, insbesondere eine Verzahnung aufweist. Insbesondere ist die Positioniereinrichtung derart ausgestaltet, dass sie ein kontrolliertes Einstellen des Abstands zwischen dem Raddrehzahlsensor und der Strukturierung zulässt. Ferner versteht der Fachmann unter einem kontrollierten Einstellen eines Abstands, dass mit einem einzelnen festgelegten Betätigungsvorgang der Positioniereinrichtung, beispielsweise einer 45°-Drehung einer Schraube oder Mutter, ein Versatz des Aufnahmebereichs zwischen 10 µm und 500 µm, bevorzugt zwischen 10 µm und 100 µm und bevorzugt zwischen 10 µm und 50 µm realisierbar ist. Vorstellbar ist dabei, dass es sich bei der Positioniereinrichtung um eine Mikrometerschraube oder einen Teil einer Mikrometerschraube handelt. Da es sich für eine optimale Signalstärke bzw. Signalqualität als vorteilhaft erwiesen hat, einen Abstand zwischen dem Polrad und dem Raddrehzahlsensor von im Wesentlichen 0,7 mm einzustellen, lässt sich mit den oben bezeichneten Versatzgrößen der optimale Wert für den Abstand realisieren. Weiterhin ist es vorstellbar, dass der Aufnahmebereich als eine rückspringende Kontur ausgestaltet ist, in die der Raddrehzahlsensor eingeschoben bzw. eingelassen und form- oder kraftschlüssig fixierbar, beispielsweise verclipsbar oder verschraubbar, ist. Alternativ ist es auch denkbar, dass der Aufnahmebereich eine Aufnahmefläche aufweist, an die der Raddrehzahlsensor stoffschlüssig, beispielsweise durch Verschweißen oder Verkleben, anbindbar ist.

Vorzugsweise ist die Vorrichtung derart gestaltet, dass der festgelegte Betätigungsvorgang von einem Signal begleitet wird. Beispielsweise wird ein entsprechendes Signal, insbesondere ein akustisches oder haptisches Signal ausgegeben, wenn der festgelegte Betätigungsvorgang abgeschlossen ist. Denkbar wäre beispielsweise, dass die Drehbewegung mit einer Einrastbewegung gekoppelt ist, insbesondere so gekoppelt ist, dass die Positioniereinrichtung nach dem festgelegten Betätigungsvorgang einrastet. Insbesondere lassen sich der Versatz und die Fixierung mit demselben festgelegten Betätigungsvorgang realisieren. Insbesondere lässt sich die Fixierung der Positioniereinrichtung ohne Klemmschraube realisieren, die andernfalls im befestigten Zustand gegen die Positioniereinrichtung bzw. den Aufnahmebereich zur deren Fixierung drückt ist. Solche Klemmschrauben sind meist so ausgerichtet, dass ihre Längsachse senkrecht oder schräg zur Versatzrichtung, entlang der die Positioniereinrichtung verlagert wird, verläuft und durch das Verschieben der Klemmschraube entlang deren Längsachse wird die Positioniereinrichtung verklemmt wird. Entsprechend erfordert die Verwendung der Klemmschraube zum Verlagerung und Fixieren zwei Bewegungen, nämlich eine Bewegung entlang der Versatzrichtung und eine Bewegung entlang der Längsachse der Klemmschraube.

Zweckmäßigerweise umfasst die Vorrichtung eine Skala, die den Nutzer über die Größe der Verlagerung informiert. Dadurch kann der Nutzer mit Vorteil abschätzen, wie groß die von ihm durchgeführte Verlagerung ist. Vorzugsweise handelt es sich um eine bewegliche Längenskala zur Steigerung der Ablesegenauigkeit auf Messgeräten, wie z. B. einen Nonius. Ferner ist es vorstellbar, dass die Skala zur groben Orientierung weitere Kennzeichnungen umfasst, so dass der Nutzer möglichst schnell in dem gewünschten Zielbereich gelangt. Dadurch lässt sich beispielsweise vermeiden, dass sich der Nutzer langsam an den optimalen Abstand annähert.

Gemäß einer weiteren Ausführungsform der vorliegenden Erfindung ist vorgesehen, dass insbesondere in einem montierten Zustand der Aufnahmebereich mittels der Positioniereinrichtung relativ zum Achskörperteil verlagerbar und insbesondere fixierbar ist. In vorteilhafter Weise lässt die Positioniervorrichtung nicht nur eine Verlagerung des Aufnahmebereichs gegenüber dem Achskörperteil zu, sondern die Positioniereinrichtung fixiert den Aufnahmebereich auch gegenüber dem Achskörperteil. Dadurch lässt sich eine dauerhafte Aufrechterhaltung des optimal eingestellten Abstands zwischen dem Polrad und dem Raddrehzahlsensor sicherstellen. Zudem erweist sich die Anbindung an das Achskörperteil als vorteilhaft, weil dadurch der Abstand zwischen der Befestigung der Vorrichtung und dem Polrad möglichst klein gehalten werden kann, wodurch eine Anfälligkeit der Vorrichtung zur Aufnahme von Schwingungen bzw. Vibrationen reduziert wird und schließlich der Raddrehzahlsensors auch im Betrieb möglichst positionsfest ausgerichtet bleibt.

Zweckmäßig ist es vorgesehen, dass die Befestigungseinrichtung über einen Befestigungsbereich formschlüssig, kraftschlüssig und/oder stoffschlüssig mit dem Achskörperteil verbindbar oder verbunden ist. Beispielsweise ist die Befestigungseinrichtung an das Achskörperteil angeschweißt oder angeschraubt. Dadurch lässt sich eine dauerhafte und stabile Verbindung zwischen der Befestigungseinrichtung und dem Achskörperteil realisieren. Die stoffschlüssige Anbindung erlaubt es zudem auf eine zusätzliche Bohrung im Achskörperteil zu verzichten und lässt sich insbesondere beim Aufrüsten bereits bestehender bzw. verbauter Radlageraufhängungen bzw. Achskörperteile nutzen. Die anschraubbare Befestigungseinrichtung ist hingegen besonders einfach austauschbar. Weiterhin ist es vorgesehen, dass der Befestigungsbereich an eine Außenform des Achskörperteils angepasst ist, um eine möglichst flächige Auflage der Befestigungseinrichtung auf dem Achskörperteil und somit stabile Anordnung zu gewährleisten.

Vorzugsweise ist es vorgesehen, dass die Positioniereinrichtung die Befestigungseinrichtung mit dem Aufnahmebereich verbindet. Mit anderen Worten ist die Positioniereinrichtung zwischen dem Aufnahmebereich und der Befestigungseinrichtung angeordnet. Insbesondere ist die Positioniereinrichtung derart ausgestaltet, dass sich ein Ende der Positioniereinrichtung ein- und ausfahren lässt, wodurch sich die Ausdehnung der Positioniereinrichtung in zumindest eine Richtung ändern lässt.

In einer weiteren Ausführungsform der vorliegenden Erfindung ist vorgesehen, dass die Positioniereinrichtung einen Führungsbereich umfasst, entlang dem der Aufnahmebereich translatorisch gelagert und/oder verlagerbar ist. Insbesondere ist es vorgesehen, dass der Führungsbereich die Bewegung des Aufnahmebereichs auf eine einzige Richtung beschränkt. Dies vereinfacht die Handhabung beim Einstellen des Abstands. Dabei ist es vorstellbar, dass die translatorische Bewegung entlang einer Geraden oder entlang einer Kurvenbahn erfolgt. Beispielsweise handelt es sich beim Führungsbereich um eine Führungsschiene oder ein System aus mehreren Führungsschienen.

Vorzugsweise ist die Vorrichtung derart gestaltet, dass der Aufnahmebereich werkzeuglos verlagert und fixiert werden kann. Dadurch kann mit Vorteil auf ein zusätzliches Werkzeug verzichtet werden. Insbesondere ist es nicht erforderlich, das Werkzeug mit sich zu führen, wenn eine Ausrichtung des Raddrehzahlsensors erforderlich ist. Beispielsweise lässt sich die Verlagerung und die Fixierung durch eine manuelle Betätigung der Positioniereinrichtung mit einer Hand bzw. Handbewegungvornehmen. Entsprechend wird auf eine komplexe Reihenfolge von Bewegungsabläufen zur Verlagerung und Fixierung der Positioniereinrichtung verzichtet.

In einer vorteilhaften Ausführungsform der vorliegenden Erfindung ist es vorgesehen, dass die Positioniereinrichtung einen Schnittstellenbereich in Form einer Befestigungslasche aufweist, wobei an einem ersten Ende des Schnittstellenbereichs der Raddrehzahlsensor oder der Aufnahmebereich angeordnet ist und die Befestigungslasche an einem zweiten Ende eine Öffnung aufweist. Dabei liegen das erste Ende und das zweite Ende vorzugsweise einander gegenüber, insbesondere in einer senkrecht zur Translationsrichtung, entlang der die Befestigungslasche bewegbar ist, verlaufenden Richtung. Insbesondere ist es vorgesehen, dass der Schnittstellenbereich verschiebbar bzw. verlagerbar ist.

Gemäß einer weiteren Ausführungsform der vorliegenden Erfindung ist es vorgesehen, dass eine Spindel durch die Öffnung am zweiten Ende des Schnittstellenbereichs durchgreift, wobei die Spindel ein Außengewinde und/oder die Öffnung ein Innengewinde umfasst, wobei das Innengewinde und/oder das Außengewinde eine Steigung zwischen 0,2 mm und 5 mm, bevorzugt zwischen 0,5 und 2,5 mm und besonders bevorzugt zwischen 0,8 und 1,5 mm aufweist. Die Spindel bildet hierbei nicht nur eine Führungsschiene, sie legt zudem mit ihrem Außengewinde fest, wie fein Änderungen beim Verschieben des Schnittstellbereichs, insbesondere der Befestigungslasche, vorgenommen werden können. Dabei hat sich insbesondere eine Steigung zwischen 0,8 und 1,5 mm als vorteilhaft erwiesen, da sie zum einen ein feines Einstellen sicherstellt und zum anderen einen ausreichend großen Versatz bereitstellt, der ein vergleichbar schnelles Einstellen des optimalen Abstands zulässt. Der Fachmann versteht dabei unter der Steigung bzw. einer Ganghöhe bei metrischen Gewinden einen Weg, der durch eine Umdrehung zurückgelegt wird, d. h. einen Abstand zwischen zwei Gewindespitzen in mm. Dabei ist es ferner vorstellbar, dass die Spindel durch einen Gewindestift oder eine durch die Befestigungseinrichtung geschraubte Schraube, insbesondere Zylinderschraube, bereitgestellt wird. Vorstellbar ist auch, dass die Spindel drehbar gelagert ist. Sofern die Spindel einerseits ein Außengewinde und die Öffnung andererseits ein Innengewinde aufweist, lassen sich die zusammenwirkenden Gewinde zur Fixierung des Schnittstellenbereichs heranziehen, wodurch die Anzahl der zusätzlichen Fixiermittel in vorteilhafter Weise reduziert werden kann. Mit anderen Worten kann das Innengewinde in der Öffnung und damit die Befestigungslasche selbst als Kontermutter wirken.

Vorzugsweise sind das Innengewinde und/oder das Außengewinde beschichtet, insbesondere mit einem Kunststofffilm. Dadurch lassen sich beispielsweise Schwingungen dämpfen, wodurch mit Vorteil der Raddrehzahlsensor auf Dauer zusätzlich geschont werden kann.

In einer weiteren Ausführungsform der vorliegenden Erfindung ist vorgesehen, dass der Schnittstellenbereich zum kontrollierten Einstellen des Abstands zwischen dem Raddrehzahlsensor und dem Polrad mittels zweier Fixiermittel gegenüber der Spindel fixierbar ist. Mittels der beiden Fixiermittel zwischen denen vorzugsweise der Schnittstellbereich angeordnet bzw. verspannt ist, lässt sich eine dauerhafte positionsfeste Ausrichtung des Raddrehzahlsensors sicherstellen. Bevorzugt handelt es sich um eine Sechskantmutter, deren Außenkontur das Festziehen und das Lösen der Muttern vereinfacht. Insbesondere sind die Fixiermittel derart ausgestaltet bzw. ausgerichtet, dass durch ein Drehen des Fixiermittels ein Verschieben des Schnittstellenbereichs veranlasst werden kann.

Weiterhin ist es in einer bevorzugten Ausführungsform vorgesehen, dass die Fixiermittel, insbesondere in einem Fixierzustand, auf gegenüberliegenden Seiten an der Befestigungslasche anliegen. Dadurch können beispielsweise die Muttern als Kontermuttern wirken und die Befestigungslasche bzw. die Schnittstelle möglichst positionsfest dauerhaft fixieren, wobei die Fixierung insbesondere den im Betrieb der Radlageraufhängung bzw. des Radlagers auftretenden Vibrationen standhält. Gemäß einer weiteren Ausführungsform der vorliegenden Erfindung ist vorgesehen, dass der Aufnahmebereich in einer schräg zur Rotationsachse verlaufenden Translationsrichtung verschiebbar gelagert ist, wobei die Translationsrichtung gegenüber einer Rotationsachse, um die das Achskörperradteil mit dem Polrad rotiert, um 30° bis 60°, bevorzugt zwischen 40° und 50° und besonders bevorzugt um im Wesentlichen 45° geneigt ist. Insbesondere ist die Translationsrichtung durch die Ausrichtung der Spindel vorgegeben. Beispielsweise lässt sich der Neigungswinkel durch einen Verlauf eines Kragens, an dem die Befestigungseinrichtung angebunden ist, mitbeeinflussen. Es ist aber auch vorstellbar, dass durch die Form der Befestigungseinrichtung die Ausrichtung der Spindel vorgibt.

Vorzugsweise ist es vorgesehen, dass der Abstand zwischen dem Raddrehzahlsensor und dem Polrad in einem Intervall von potentiellen Abständen zwischen 0,2 und 3 mm, bevorzugt 0,3 und 2,3 mm und besonders bevorzugt zwischen 0,5 und 1,5 mm einstellbar ist. Durch die Vorgabe von Intervallen, lässt sich vermeiden, dass sich der Nutzer bei der Suche des optimalen Abstands versehentlich zu weit vom optimalen Wert entfernt oder dass der Raddrehzahlsensor bei der Justage versehentlich gegen das Polrad schlägt. Beispielsweise lässt sich das Intervall durch Anschläge an der Führungsschiene oder der Spindel realisieren.

Zweckmäßig ist es vorgesehen, dass der Raddrehzahlsensor relativ zum Aufnahmebereich entlang einer weiteren Translationsrichtung verschiebbar gelagert ist. Dadurch lässt sich ein weiterer, insbesondere unabhängiger, Freiheitsgrad für die Ausrichtung der Raddrehzahlsensor bereitstellen, der zusammen mit der Bewegung entlang der Translationsrichtung dem Nutzer eine größere Freiheit bei der Verlagerung bzw. Positionierung des Raddrehzahlsensors gegenüber dem Polrad gestattet.

Gemäß einer weiteren Ausführungsform der vorliegenden Erfindung ist es vorgesehen, dass die Befestigungseinrichtung zur weiteren Einstellung des Abstandes zwischen dem Polrad und dem Raddrehzahlsensor schwenkbar am Achskörperteil angeordnet ist. Dadurch lässt sich vorzugsweise die Bewegungsfreiheit beim Einstellen der Position des Raddrehzahlsensors weiter vergrößern. Denkbar ist auch, dass die Positioniereinrichtung schwenkbar an der Befestigungseinrichtung angeordnet ist. Dabei ist der Grad der Verschwenkung vorzugsweise fixierbar, so dass man im Vorfeld einer Feinjustage mittels der Positioniereinrichtung die Translationsrichtung einstellen und fixieren kann und im Anschluss mit der gewählten Translationsrichtung zur Feinjustage den Abstand zwischen dem Polrad und dem Raddrehzahlsensor ändern.

In einer weiteren vorteilhaften Ausführungsform der vorliegenden Erfindung ist es vorgesehen, dass die Befestigungseinrichtung in einer durch die Rotationsachse des Achskörperteils vorgegebenen axialen Richtung um einen Halterabstand zum Polrad versetzt am weiteren Achskörperteil angebunden ist, wobei das Verhältnis zwischen Halterabstand zur in axialen Richtung bemessenen Dicke des Polrads einen Wert zwischen 0,75 und 5, bevorzugt zwischen 0,8 und 3 und besonders bevorzugt zwischen 0,9 und 1,8 annimmt. Durch das Einstellen der angegebenen Dimensionierungen lässt sich ein möglichst nahe Anordnung der Befestigungseinrichtung realisieren, die es erlaubt im Betrieb der Vorrichtung bzw. des Radlagers, die Aufnahme von Schwingungen reduzieren. Folge ist eine Aufrechterhaltung des optimalen Abstands zwischen dem Raddrehzahlsensor und dem Polrad. Eine Dimensionierung mit einem Verhältnis zwischen 0,9 und 1,8 erlaubt es zudem in vorteilhafter Weise die Vorrichtung möglichst klein und damit bauraumökonomisch auszugestalten.

Ein weiterer Gegenstand der vorliegenden Erfindung ist ein ABS-System umfassend eine Vorrichtung zum Positionieren eines Raddrehzahlsensors relativ zu einem Polrad, umfassend eine Befestigungseinrichtung zur Anbindung der Vorrichtung an ein Achskörperteil, einen Aufnahmebereich zur Aufnahme des Raddrehzahlsensors, eine Positioniereinrichtung zum kontrollierten Einstellen eines Abstands zwischen dem Aufnahmebereich und dem Polrad und ein Achskörperteil und ein drehfest mit dem Polrad verbundenes weiteres Achskörperteil, wobei das weitere Achskörperteil zum Achskörperteil um eine Rotationsachse rotierbar gelagert ist. Alle für die erfindungsgemäße Vorrichtung beschriebenen Merkmale und deren Vorteile lassen sich sinngemäß ebenfalls auf das erfindungsgemäße ABS-System übertragen und andersherum. Vorzugsweise umfasst das ABS-System eine Steuer bzw. Auswerteeinrichtung, die die Messgröße des Raddrehzahlssensors empfängt und auswertet.

Ein weiterer Gegenstand der vorliegende Erfindung ist ein Verfahren zur Justage eines Raddrehzahlsensors mittels einer erfindungsgemäßen Vorrichtung, umfassend die Verfahrensschritt: Bereitstellen des Achskörperteils Montage der Befestigungseinrichtung am Achskörperteil, Anbringen des Raddrehzahlsensors am Aufnahmebereich und Einstellen des Abstands zwischen dem Raddrehzahlsensor und dem Polrad mittels der Positioniereinrichtung.

Alle für die erfindungsgemäße Vorrichtung beschriebenen Merkmale und deren Vorteile lassen sich sinngemäß ebenfalls auf das erfindungsgemäße Verfahren übertragen und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig.1:**: eine Vorrichtung zum Positionieren eines Raddrehzahlsensors gemäß einer ersten bevorzugten Ausführungsform der vorliegenden Erfindung
- Fig. 2:: eine Vorrichtung zum Positionieren eines Raddrehzahlsensors gemäß einer zweiten bevorzugten Ausführungsform der vorliegenden Erfindung

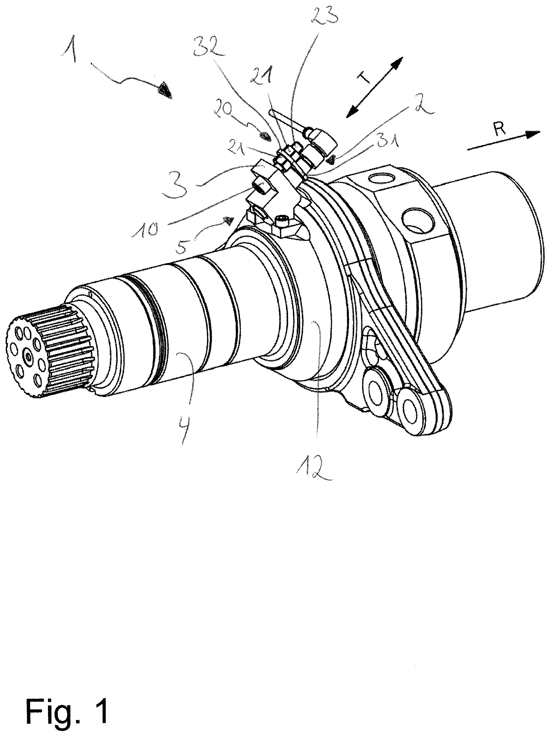

In **Figur 1** ist eine Vorrichtung 1 zum Positionieren eines Raddrehzahlsensors 5 gemäß einer ersten bevorzugten Ausführungsform der vorliegenden Erfindung dargestellt. Solche Raddrehzahlsensoren 5 sind bevorzugt Teil eines ABS-Systems und dienen der Bestimmung der aktuellen Drehzahl eines Fahrzeugrads. Wesentlicher Bestandteil des ABS-Systems ist neben einem Achskörperteil 4 und einem gegenüber dem Achskörperteil 4 um eine Rotationsachse rotierbaren weiteren Achskörperteil ein Polrad (nicht dargestellt), das drehfest mit dem weiteren Achskörperteil verbunden ist. Insbesondere ist das Fahrzeugrad ebenfalls an das weitere Achskörperteil angebunden. Vorzugsweise umfasst das Polrad an seinem Umfang eine Strukturierung, beispielsweise eine Verzahnung. Der Raddrehzahlsensor 5, insbesondere der ortsfest angeordnete Raddrehzahlsensor 5, erfasst dann den Wechsel zwischen der Verzahnung und dem Leerbereich zwischen den Verzahnungen, wodurch auf eine aktuelle Raddrehzahl zurückgeschlossen werden kann. Wesentliches Kriterium für eine erfolgreiche Funktionalität ist hierbei die positionsgenaue Anordnung des Raddrehzahlsensors 5 gegenüber dem Polrad. Vorzugsweise ist es vorgesehen, dass die Vorrichtung 1 zum Positionieren eines Raddrehzahlsensors 5 relativ zum Polrad eine Befestigungseinrichtung 3 zum Befestigen an dem Achskörper 4 und einen Aufnahmebereich 2 zur Aufnahme des Raddrehzahlsensors 5 aufweist. In der in Figur 1 dargestellten Ausführungsform ist die Befestigungseinrichtung 3 an das Achskörperteil 4 angeschraubt. Insbesondere ist die Befestigungseinrichtung 3 an einem Kragen 12 des Achskörperteils 4, insbesondere an einem umlaufend an dem Achskörperteil verlaufenden Kragen 12, angebunden. Zum kontrollierten Einstellen des Abstands zwischen dem Raddrehzahlsensors 5 und dem Polrad ist eine Positioniereinrichtung 20 vorgesehen, mit deren Hilfe sich der Aufnahmebereich 2 gegenüber der Befestigungseinrichtung 3 verlagern, insbesondere verschieben, lässt. Vorzugsweise umfasst die Positioniereinrichtung 20 hierbei eine Befestigungslasche 22, an deren ersten Ende 31 der Aufnahmebereich 2 für den Raddrehzahlsensor 5 und an deren zweiten Ende 32 eine Öffnung angeordnet ist. Eine von der Befestigungseinrichtung 3 abstehende Spindel 23 mit einem Außengewinde durchgreift dabei die Öffnung. Dabei ist es vorstellbar, dass die Spindel 23 ein Gewindestift oder ein Gewinde einer in die Befestigungseinrichtung 3 eingeschraubten Schraube mit einem Schraubenkopf 10 ist. Zur Fixierung der Befestigungslasche 22 sind zwei Fixiermittel 21 vorgesehen, die auf einander gegenüberliegenden Seiten der Befestigungslasche 22, insbesondere im Bereich der Öffnung, anordbar sind. Beispielsweise handelt es sich bei dem Fixiermittel 21 um Muttern, insbesondere Sechskantschrauben, die auf das Gewinde aufschraubar sind. Vorzugsweise ist die Befestigungslasche 22 zwischen den Fixiermitteln 21 angeordnet und die Befestigungslasche 22 lässt sich zum Fixieren zwischen den Fixiermitteln 21 verklemmen. Zum Verstellen des Abstands der Befestigungslasche 22 zur Befestigungseinrichtung 3 und damit des Abstands zwischen dem Polrad und dem Raddrehzahlsensor 5 lassen sich dann beispielsweise die Muttern verdrehen. Dabei lässt sich die Befestigungslasche 22 entlang einer Translationsrichtung T verschieben, die durch die Ausrichtung der Spindel vorgegeben ist und vorzugsweise schräg zu einer Rotationsachsenrichtung R verläuft, insbesondere um einen Winkel von im Wesentlichen 45 ° gegenüber der Rotationsachsenrichtung R geneigt ist.

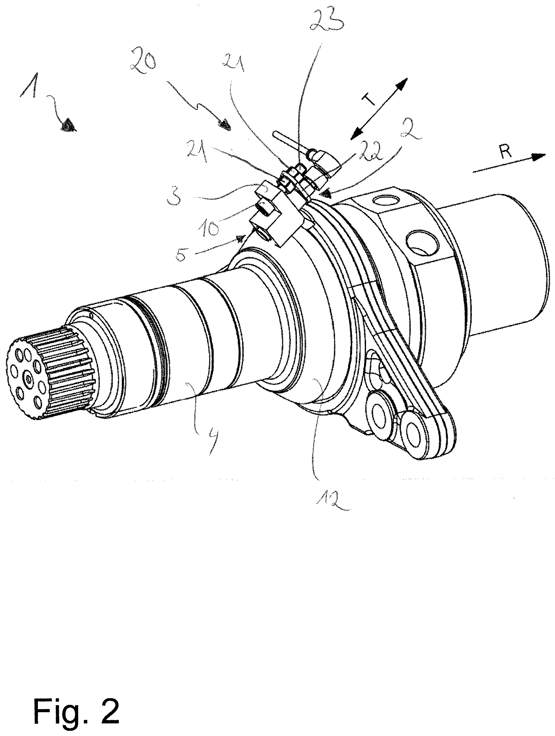

In **Figur 2** ist eine Vorrichtung 1 zum Positionieren eines Raddrehzahlsensors 5 gemäß einer zweiten bevorzugten Ausführungsform der vorliegenden Erfindung dargestellt. Hierbei unterscheidet sich die Vorrichtung 1 von der Vorrichtung 1 aus Figur 1 nur dahingehend dass die Befestigungseinrichtung 3 der zweiten bevorzugten Ausführungsform an das Achskörperteil 4 angeschweißt ist. Insbesondere ist die Befestigungseinrichtung 3 an den Kragen 12 des Achskörperteils 4, insbesondere einer schräg zur Rotationsachsenrichtung R verlaufenden Kragenseite des Achskörperteils 4, angeschweißt.

### Bezugszeichen

- 1: Vorrichtung
- 2: Aufnahmebereich
- 3: Befestigungseinrichtung
- 4: Achskörperteil
- 5: Raddrehzahlsensor
- 10: Schraubkopf
- 12: Kragen
- 20: Positioniereinrichtung
- 21: Fixiermittel
- 22: Befestigungslasche
- 23: Spindel
- 31: erstes Ende
- 32: zweites Ende
- R: Rotationsachsenrichtung
- T: Translationsrichtung

## Patentansprüche

1. Vorrichtung (1) zum Positionieren eines Raddrehzahlsensors (5) relativ zu einem Polrad, umfassend
eine Befestigungseinrichtung (3) zur Anbindung der Vorrichtung (1) an ein Achskörperteil (4), und einen Aufnahmebereich (2) zur Aufnahme des Raddrehzahlsensors (5), **dadurch gekennzeichnet, dass** die Vorrichtung weiter eine Positioniereinrichtung (20) zum kontrollierten Einstellen eines Abstands zwischen dem Aufnahmebereich (2) und dem Polrad umfasst.

2. Vorrichtung (1) gemäß Anspruch 1, wobei der Aufnahmebereich (2) mittels der Positioniereinrichtung (20) relativ zum Achskörperteil (4) verlagerbar ist.

3. Vorrichtung (1) gemäß einem der vorhergehenden Ansprüche, wobei die Befestigungseinrichtung (3) über einen Befestigungsbereich formschlüssig, kraftschlüssig und/oder stoffschlüssig mit dem Achskörperteil (4) verbindbar ist.

4. Vorrichtung (1) gemäß einem der vorhergehenden Ansprüche, wobei die Positioniereinrichtung (20) die Befestigungseinrichtung (3) mit dem Aufnahmebereich (2) verbindet.

5. Vorrichtung (1) gemäß einem der vorhergehenden Ansprüche, wobei die Positioniereinrichtung (20) einen Führungsbereich umfasst, entlang dem der Aufnahmebereich (2) translatorisch gelagert ist.

6. Vorrichtung gemäß einem der vorhergehenden Ansprüche, wobei die Positioniereinrichtung (20) einen Schnittstellenbereich in Form einer Befestigungslasche (22) aufweist, wobei an einem ersten Ende (31) des Schnittstellenbereichs der Raddrehzahlsensor (5) oder der Aufnahmebereich (2) angeordnet ist und die Befestigungslasche (22) an einem zweiten Ende (32) eine Öffnung aufweist.

7. Vorrichtung (1) gemäß Anspruch 6, wobei eine Spindel (23) durch die Öffnung am zweiten Ende (32) den Schnittstellenbereich durchgreift, wobei die Spindel (23) ein Außengewinde und/oder die Öffnung ein Innengewinde umfasst, wobei das Innengewinde und/oder das Außengewinde eine Steigung zwischen 0,2 mm und 5 mm aufweist.

8. Vorrichtung (1) gemäß Anspruch 7, wobei der Schnittstellenbereich (22) zum kontrollierten Einstellen des Abstands zwischen dem Raddrehzahlsensor (5) und dem Polrad mittels zweier Fixiermittel (21) gegenüber der Spindel (23) fixierbar ist.

9. Vorrichtung (1) gemäß Anspruch 8, wobei die Fixiermittel (21) auf gegenüberliegenden Seiten an der Befestigungslasche (22) anliegen.

10. Vorrichtung (1) gemäß einem der vorhergehenden Ansprüche, wobei der Aufnahmebereich (2) in einer schräg zur Rotationsachse verlaufenden Translationsrichtung verschiebbar gelagert ist, wobei die Translationsrichtung gegenüber einer Rotationsachse, um die das Achskörperradteil mit dem Polrad rotiert, um 30° bis 60° geneigt ist.

11. Vorrichtung (1) gemäß einem der vorhergehenden Ansprüche, wobei der Abstand zwischen dem Raddrehzahlsensor (5) und dem Polrad in einem Intervall von Abständen zwischen 0,2 und 3 mm einstellbar ist.

12. Vorrichtung (1) gemäß einem der vorhergehenden Ansprüche, wobei der Raddrehzahlsensor (5) relativ zum Aufnahmebereich (2) entlang einer weiteren Translationsrichtung verschiebbar gelagert ist.

13. Vorrichtung (1) gemäß einem der vorhergehenden Ansprüche, wobei die Befestigungseinrichtung (3) zur weiteren Einstellung des Abstandes (A) zwischen dem Polrad (2) und dem Raddrehzahlsensor (5) schwenkbar am Achskörperteil (4) angeordnet ist.

14. Vorrichtung (1) gemäß einem der vorhergehenden Ansprüche, wobei die Befestigungseinrichtung (3) in einer durch die Rotationsachse des Achskörperteils (4) vorgebbaren axialen Richtung um einen Halterabstand zum Polrad versetzt am Achskörperteil (4) anbindbar ist.

15. ABS-System umfassend eine Vorrichtung (1) zum Positionieren eines Raddrehzahlsensors (5) relativ zu einem Polrad, umfassend eine Befestigungseinrichtung (3) zur Anbindung der Vorrichtung (1) an ein Achskörperteil (4), und einen Aufnahmebereich (2) zur Aufnahme des Raddrehzahlsensors (5), **dadurch gekennzeichnet, dass** das System weiter eine Positioniereinrichtung (20) zum kontrollierten Einstellen eines Abstands zwischen dem Aufnahmebereich (2) und dem Polrad, und ein Achskörperteil (4) und ein drehfest mit dem Polrad verbundenes weiteres Achskörperteil umfasst, wobei das weitere Achskörperteil zum Achskörperteil (4) um eine Rotationsachse rotierbar gelagert ist.

16. Verfahren zur Justage eines Raddrehzahlsensors (5) mittels einer Vorrichtung (1) gemäß einem der vorhergehenden Ansprüche 1 - 14, umfassend die Verfahrensschritt:
- Bereitstellen des Achskörperteils (4),
- Montage der Befestigungseinrichtung (3) am Achskörperteil (4),
- Anbringen des Raddrehzahlsensors an dem Aufnahmebereich, und
- Einstellen des Abstands (A) zwischen dem Raddrehzahlsensor (5) und dem Polrad mittels der Positioniereinrichtung.

## Claims

1. A device (1) for positioning a wheel speed sensor (5) relative to a pole wheel, comprising
a fastening mechanism (3) for attaching the device (1) to an axle body part (4), and
a receiving region (2) for receiving the wheel speed sensor (5), **characterized in that** the device further comprises a positioning mechanism (20) for the controlled setting of a distance between the receiving region (2) and the pole wheel.

2. The device (1) as claimed in claim 1, wherein the receiving region (2) can be displaced relative to the axle body part (4) by means of the positioning mechanism (20).

3. The device (1) as claimed in either of the preceding claims, wherein the fastening mechanism (3) can be connected via a fastening region to the axle body part (4) in a form-fitting, force-fitting and/or integrally bonded manner.

4. The device (1) as claimed in one of the preceding claims, wherein the positioning mechanism (20) connects the fastening mechanism (3) to the receiving region (2).

5. The device (1) as claimed in one of the preceding claims, wherein the positioning mechanism (20) comprises a guide region along which the receiving region (2) is translationally mounted.

6. The device as claimed in one of the preceding claims, wherein the positioning mechanism (20) has an interface region, in the form of a fastening tab (22), wherein the wheel speed sensor (5) or the receiving region (2) is arranged at a first end (31) of the interface region, and the fastening tab (22) has an opening at a second end (32).

7. The device (1) as claimed in claim 6, wherein a spindle (23) reaches through the opening at the second end (32) of the interface region, wherein the spindle (23) comprises an external thread and/or the opening comprises an internal thread, wherein the internal thread and/or the external thread has a pitch between 0.2 mm and 5 mm.

8. The device (1) as claimed in claim 7, wherein, for the controlled setting of the distance between the wheel speed sensor (5) and the pole wheel, the interface region (22) can be fixed with respect to the spindle (23) by means of two fixing means (21).

9. The device (1) as claimed in claim 8, wherein the fixing means (21) bear against the fastening tab (22) on opposite sides.

10. The device (1) as claimed in one of the preceding claims, wherein the receiving region (2) is displaceably mounted in a translation direction extending obliquely to the axis of rotation, wherein the translation direction is inclined with respect to an axis of rotation, about which the axle body wheel part with the pole wheel rotates, by 30° to 60°.

11. The device (1) as claimed in one of the preceding claims, wherein the distance between the wheel speed sensor (5) and the pole wheel can be set in a range of distances between 0.2 and 3 mm.

12. The device (1) as claimed in one of the preceding claims, wherein the wheel speed sensor (5) is displaceably mounted relative to the receiving region (2) along a further translation direction.

13. The device (1) as claimed in one of the preceding claims, wherein, for further setting of the distance (A) between the pole wheel (2) and the wheel speed sensor (5), the fastening mechanism (3) is pivotably arranged on the axle body part (4).

14. The device (1) as claimed in one of the preceding claims, wherein the fastening mechanism (3) is attachable to the axle body part (4) so as to be offset by a holder distance from the pole wheel in an axial direction predeterminable by the axis of rotation of the axle body part (4).

15. An ABS system comprising a device (1) for positioning a wheel speed sensor (5) relative to a pole wheel, comprising
a fastening mechanism (3) for attaching the device (1) to an axle body part (4), and
a receiving region (2) for receiving the wheel speed sensor (5), **characterized in that** the system further comprises
a positioning mechanism (20) for the controlled setting of a distance between the receiving region (2) and the pole wheel, and
an axle body part (4) and a further axle body part which is connected to the pole wheel in a rotationally fixed manner, wherein the further axle body part is mounted so as to be rotatable with respect to the axle body part (4) about an axis of rotation.

16. A method for adjusting a wheel speed sensor (5) by means of a device (1) as claimed in one of the preceding claims 1-14, comprising the method steps of:
- providing the axle body part (4),
- mounting the fastening mechanism (3) on the axle body part (4),
- mounting the wheel speed sensor on the receiving region, and
- setting the distance (A) between the wheel speed sensor (5) and the pole wheel by means of the positioning mechanism.

## Revendications

1. Dispositif (1) pour le positionnement d'un capteur de vitesse de rotation de roue (5) par rapport à une roue polaire, comprenant un moyen de fixation (3) pour relier le dispositif (1) à une partie de corps d'essieu (4), et
une zone de réception (2) pour recevoir le capteur de vitesse de rotation de roue (5),
**caractérisé en ce que** le dispositif comprend en outre
un moyen de positionnement (20) pour le réglage contrôlé d'une distance entre la zone de réception (2) et la roue polaire.

2. Dispositif (1) selon la revendication 1,
dans lequel la zone de réception (2) peut être déplacée par rapport à la partie de corps d'essieu (4) à l'aide du moyen de positionnement (20).

3. Dispositif (1) selon l'une des revendications précédentes,
dans lequel le moyen de fixation (3) peut être relié par coopération de forme, par coopération de force et/ou par coopération de matière à la partie de corps d'essieu (4) par une zone de fixation.

4. Dispositif (1) selon l'une des revendications précédentes,
dans lequel le moyen de positionnement (20) relie le moyen de fixation (3) à la zone de réception (2).

5. Dispositif (1) selon l'une des revendications précédentes,
dans lequel le moyen de positionnement (20) comprend une zone de guidage le long de laquelle la zone de réception (2) est montée de façon mobile en translation.

6. Dispositif selon l'une des revendications précédentes,
dans lequel le moyen de positionnement (20) présente une zone interface sous la forme d'une patte de fixation (22), le capteur de vitesse de rotation de roue (5) ou la zone de réception (2) étant disposé(e) à une première extrémité (31) de la zone interface et la patte de fixation (22) présentant une ouverture à une deuxième extrémité (32).

7. Dispositif (1) selon la revendication 6,
dans lequel une broche (23) traverse la zone interface par l'ouverture à la deuxième extrémité (32), et la broche (23) présente un filetage et/ou l'ouverture présente un taraudage, le filetage et/ou le taraudage présentant un pas entre 0,2 mm et 5 mm.

8. Dispositif (1) selon la revendication 7,
dans lequel la zone interface (22) peut être fixée par rapport à la broche (23) à l'aide de deux moyens de fixation (21) pour le réglage contrôlé de la distance entre le capteur de vitesse de rotation de roue (5) et la roue polaire.

9. Dispositif (1) selon la revendication 8,
dans lequel les moyens de fixation (21) s'appuient contre la patte de fixation (22) sur des côtés opposés.

10. Dispositif (1) selon l'une des revendications précédentes,
dans lequel la zone de réception (2) est montée de manière à pouvoir être déplacée dans une direction de translation s'étendant en oblique par rapport à l'axe de rotation, la direction de translation étant inclinée de 30° à 60° par rapport à un axe de rotation autour duquel la partie de corps d'essieu tourne avec la roue polaire.

11. Dispositif (1) selon l'une des revendications précédentes,
dans lequel la distance entre le capteur de vitesse de rotation de roue (5) et la roue polaire est réglable dans un intervalle de distances compris entre 0,2 et 3 mm.

12. Dispositif (1) selon l'une des revendications précédentes,
dans lequel le capteur de vitesse de rotation de roue (5) est monté de manière à pouvoir être déplacé par rapport à la zone de réception (2) le long d'une autre direction de translation.

13. Dispositif (1) selon l'une des revendications précédentes,
dans lequel le moyen de fixation (3) est disposé de manière pivotante sur la partie de corps d'essieu (4) pour un autre réglage de la distance (A) entre la roue polaire (2) et le capteur de vitesse de rotation de roue (5).

14. Dispositif (1) selon l'une des revendications précédentes,
dans lequel le moyen de fixation (3) peut être relié à la partie de corps d'essieu (4) dans une direction axiale prédéterminée par l'axe de rotation de la partie de corps d'essieu (4) en étant décalé d'une distance de maintien par rapport à la roue polaire.

15. Système ABS comprenant un dispositif (1) de positionnement d'un capteur de vitesse de rotation de roue (5) par rapport à une roue polaire, comprenant
un moyen de fixation (3) pour relier le dispositif (1) à une partie de corps d'essieu (4), et
une zone de réception (2) pour recevoir le capteur de vitesse de rotation de roue (5),
**caractérisé en ce que**
le système comprend en outre un moyen de positionnement (20) pour le réglage contrôlé d'une distance entre la zone de réception (2) et la roue polaire, et
une partie de corps d'essieu (4) et une autre partie de corps d'essieu qui est reliée solidairement en rotation à la roue polaire,
l'autre partie de corps d'essieu étant montée de manière à pouvoir tourner autour d'un axe de rotation par rapport à la partie de corps d'essieu (4).

16. Procédé d'ajustement d'un capteur de vitesse de rotation de roue (5) à l'aide d'un dispositif (1) selon l'une des revendications 1 à 14, comprenant les étapes consistant à :
- fournir une partie de corps d'essieu (4),
- monter le moyen de fixation (3) sur la partie de corps d'essieu (4),
- fixer le capteur de vitesse de rotation de roue à la zone de réception, et
- régler la distance (A) entre le capteur de vitesse de rotation de roue (5) et la roue polaire à l'aide du moyen de positionnement.
